# EUROPEAN PATENT APPLICATION

(11) **EP 3 836 183 A1**
(43) Date of publication of application: **16.06.2021**
(21) Application number: 19215103.3
(22) Date of filing: 11.12.2019
(51) Int. Cl.: H01H 31/30, H01H 11/00, G06F 30/20

(54) **DEVICE ASSEMBLY SYSTEM, METHOD AND COMPUTER PROGRAM PRODUCT FOR ASSEMBLING A MODULAR SWITCHING DEVICE**

(71) Applicant: Siemens Aktiengesellschaft, 80333 München (DE)
(72) Inventor: KOMMA, Viswanatha Reddy, 500054 Hyderabad (IN); MOGATALA, Sateeswara Reddy, 500084 Hyderabad (IN); ROHMANN, Mariusz, 13469 Berlin (DE); SCHRÄDER, Dirk, 13158 Berlin (DE)

(57) **Abstract**

A device assembly system (300), a method (200), and a computer program product for assembling a modular switching device are provided. The computer implemented method (200) employing the device assembly system (300) receives device installation data (501) comprising at least geographical data and an operational rating of the switching device, and generates (202), based on the device installation data (501), one or more recommendations (R_C1 - R_C5), wherein each recommendation (R_C1 - R_C5) comprises at least one configuration (C1-C5) of the switching device, and a plurality of components (106A, 106B, 107, 108, 109, 110) required for assembly of the at least one configuration (C1-C5) of the switching device from a component repository (302) .

## Description

The present disclosure relates to switching devices and their assembly. More particularly, the present disclosure relates to high voltage switching devices such as disconnectors including a center-break disconnector, a double-side-break disconnector, a knee-type disconnector, a vertical break disconnector, a vertical reach disconnector, a side break disconnector, a pantograph disconnector, and/or a semi-pantograph disconnector. More particularly, the present disclosure relates to a system and a method for assembling aforementioned disconnector having a modular construction.

A switching device is, for example, a disconnector. A disconnector is an essential part of electrical power substations. A disconnector indicates a visible isolating distance via an air-isolated gap. A disconnector is an assembly having a function of ensuring an interruption of voltage supply line with the switchgear when the disconnector is open, thus isolating the switchgear from electric supply. A disconnector typically includes various aforementioned configurations and is a highly modular device wherein the components vary to a great extent based on the intended application, for example, a rating, a geographical location of installation, a substation into which the device is to be installed, etc.

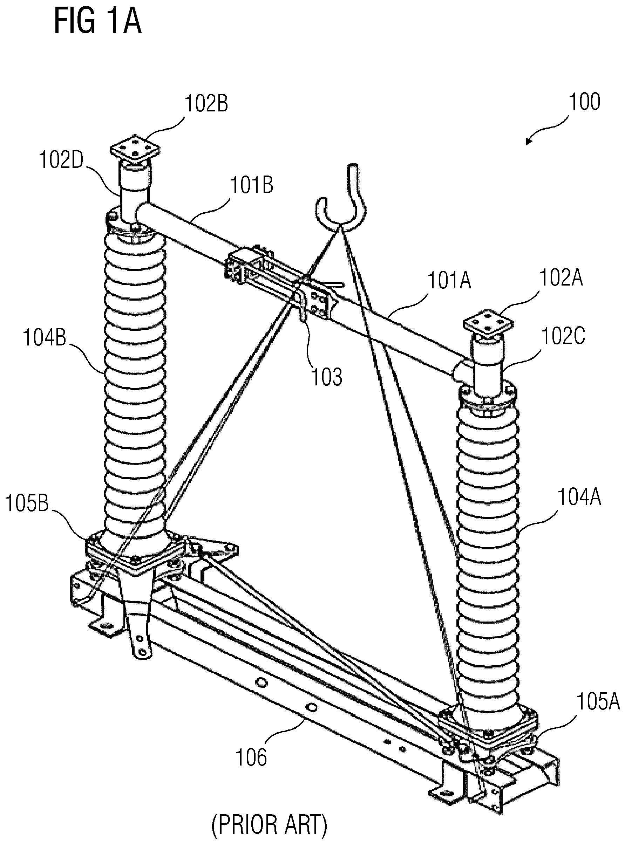

FIG 1A is a perspective view of an active part of a switching device, for example, a horizontal center-break type disconnector 100 according to state of the art. The switching device 100 has movable current path arms 101A and 101B detachably coupled to each other and capable of rotation to occupy two positions, namely a closed position and an open position. The configuration shown in FIG 1A represents the closed position wherein the moving arms 101A and 101B are in electrical contact with each other via a main contact system 103. In the open position, the moveable contact arms 101A and 101B rotate so as to break the electrical contact between them. Each of the moveable contact arms 101A and 101B are connected to the electricity supply and to the distribution bus bars via transfer contact systems 102C and 102D having rotatable terminal stems 102A and 102B respectively. Each of the terminal stems 102A and 102B, the moveable contact arms 101A and 101B, and the main contact system 103, are supported by insulators 104A and 104B which are in turn supported by a base frame 106. The base frame comprises rotary units 105A and 105B that incorporate a rotation drive mechanism providing linear and/or rotary movement to the insulators 104A and 104B and the contact system 103 thereby, leading to making and breaking of the current path between the moveable contact arms 101A and 101B. The rotary units 105A and 105B typically comprise ball-bearings, shaft, disc, etc., designed for handling high mechanical loads.

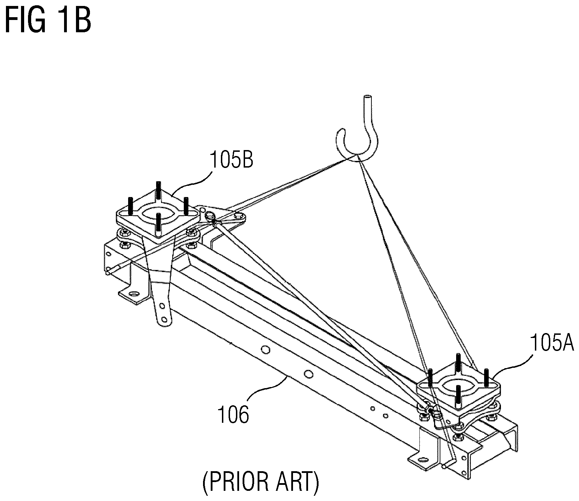

FIG 1B is a perspective view of the base frame 106, according to state of the art, of the switching device 100 shown in FIG 1A. Each of the rotary units 105A and 105B (also known as rotary base units, rotary stool bases, rotary pedestals, etc.) of the base frame 106, enables transmission of a linear motion to a rotary motion. Typically, these rotary units 105A and 105B are casted or welded. Moreover, these are typically, semi-integrated to the substructure or base frame 106. These conventional variants of the rotary units 105A and 105B, require high efforts for managing any variations in design specifications. Furthermore, these conventional variants of the rotary units 105A and 105B also demand additional items and/or elements for stabilizing the base frame 106, for applications especially, with additional mechanical stresses and/or environment stress due to increased terminal size, wind, and/or seismic loads, beyond standardizations.

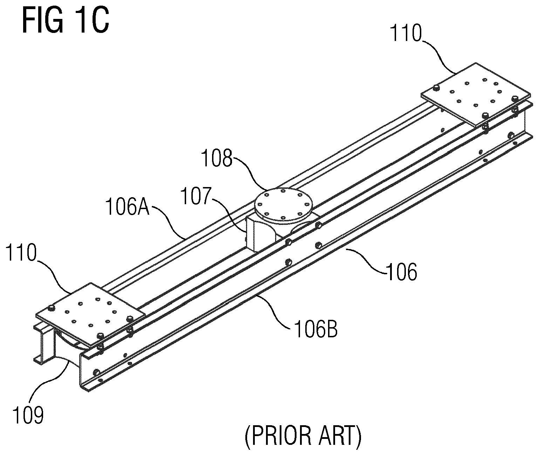

FIG 1C is a perspective view of a base frame 106 according to state of the art for a double side break disconnector having a concave polygonal shaped rotary unit 107 for addressing the aforementioned problems, as disclosed in EP19194582. This generally concave polygonal shaped rotary unit 107 has a near complete integration into channels 106A and 106B of the base frame 106 for reducing the efforts required to accommodate design variations without compromising on mechanical stability. The rotary unit 107 supports installation of a turn table 108 thereon for mounting of an insulator 104A or 104B as shown in FIG 1A. However, the mechanical stability offered due to increased stiffness of an integrated rotary unit may not be enough in some disconnector configurations such as a double side break disconnector with a big size due to an increased length for high altitude applications or high rated voltage level, or a knee-type and/or vertical disconnector or a center break and/or a side break disconnector thereby, calling for additional components such as stiffeners 109 to be inserted into the base frame channels 106A and 106B in addition to the elevator plates 110. Moreover, such a design leads to an increased modularity of the switching device. Thus, there exists a need for effective component variation management across various configurations of a disconnector.

Accordingly, it is an object of the present invention, to provide a system and a method for effectively assembling a modular switching device such as the aformentioned disconnector while ensuring compliance to requirements of a customer purchasing the switching device and without compromising on the mechanical stability of the switching device.

The switching device disclosed herein achieves the aforementioned object by providing a system and a method that generates recommendations for components to be selected for an effective assembly of a high voltage switching device from a limited set of components available thereby, accommodating variations in customer requirements within and beyond industry standards, for example, IEC standards, maintaining switching device modularity while enhancing supply chain efficiency by maximizing re-usability of available components, thereby, increasing associated profits.

Disclosed herein is a computer implemented method for assembling a modular switching device. The modular switching device is, for example, a modular high voltage switching device such as a disconnector, an earthing switch, or a circuit breaker, having a large amount of component variation within each family of devices leading to an increased effort in component selection, assembly and installation. For example, in a disconnector family based on different sizes of the device, different operating voltage levels, and/or different load conditions such as terminal, wind or seismic loads, the components required for the device assembly and installation may vary to a great extent beyond the standardized components.

The computer implemented method receives device installation data comprising at least geographical data and an operational rating of the switching device. As used herein, "geographical data" refer to a geographical region of device installation, a seismic zone of the geographical region, a wind zone of the geographical region, a substation of device installation, and/or a layout of the substation of device installation. Also used herein, "operational rating" refers to an operational voltage rating i.e. kV rating, an operational power rating, an operational current rating, and/or a terminal load i.e. mechanical load to be borne by the device within and beyond industry standards.

According to one embodiment of the present disclosure, the device installation data is received from a user, for example, a customer such as a substation or a utility engineer placing an order for the modular switching device.

According to another embodiment of the present disclosure, the device installation data is accessed from a device assembly database having historical data stored regarding particular utility or a substation.

According to yet another embodiment of the present disclosure, the device installation data comprises physical dimensions of the modular switching device. The physical dimensions include, for example, a length of the sub-structure which in turn defines flexibility requirements, mechanical strength and stiffness requirements of the device. For example, longer length implies higher mechanical stiffness requirements as typically seen in disconnectors having kV ratings of about 145 kV to about 245 kV. In another example, kV rating is affected due to altitude of intended device installation as a result of high flashover probability caused due to lack of oxygen. This in turn implies increase in mechanical stiffness requirements.

According to yet another aspect of the present disclosure, the device installation data comprises physical positioning and mounting requirements of the modular switching device. For example, in case of disconnectors, the device installation data may include positioning and alignment of support structures. Advantageously, these inputs enable the computer implemented method to facilitate assembly of the modular switching device while ensuring access to the support structures is not impeded.

According to yet another aspect of the present disclosure, the device installation data comprises a configuration of the modular switching device which is preferred by the user/customer. For example, a double break type disconnector configuration.

The computer implemented method disclosed herein generates, based on the device installation data, one or more recommendations. Each recommendation includes at least one configuration of the switching device and components required for assembly of the recommended configuration(s) of the switching device from a component repository. As used herein, the term "configuration" refers to various constructions and/or mounting arrangements of a family of modular switching devices. For example, a disconnector family has various configurations comprising, for example, a center break type, a double side break type, a knee type, a vertical break type, a side break type, a vertical reach type, a semi-pantograph type, and a pantograph type. For each of these configurations the components required, i.e. the sub-structures may vary in quantity and quality as per the device installation data received. In this example, the components required by the disconnector family across configurations include, a pair of contact arms, post insulators supporting the contact arms, rotary units and elevator plates supporting the post insulators, a base frame with channels supporting and/or integrated with the rotary units and the elevator plates, stiffeners for adding to mechanical strength of the device, a drive mechanism for causing movement of the contact arms, etc. The component repository stores an updated inventory of these components. The computer implemented method, advantageously optimizes variation management across the mechanical components to reduce efforts invested in inventory management, supplier and price negotiations, as well as ensuring manufacturing optimizations.

According to an embodiment of the present disclosure, the computer implemented method when generating the recommendations, determines a flexibility in mechanical parameter variations of the switching device based on the geographical data and the operational rating of the switching device. In this embodiment, the device installation data received does not comprise user preferences regarding flexibility in mechanical parameters. As used herein, "mechanical parameters" refer to mechanical stiffness, mechanical strength, and/or mechanical mass of the modular switching device. In this embodiment, based on the operational rating and the geographical data the computer implemented method derives whether there is room for flexibility or not. For example, if the altitude of installation is lower than a certain threshold, then there is flexibility possible in varying mechanical parameters such as mechanical stiffness. Vice versa, for higher altitudes, there isn't much flexibility possible in varying the mechanical parameters as the mechanical strength and stiffness required cannot be compromised. Similarly, the operational kV rating is an indicator of the device size, for example, bigger the size, longer the length of the sub-structure and lesser the flexibility in mechanical stiffness possible. The computer implemented method uses flexibility level determined while generating recommendations for components required for a particular configuration.

According to another embodiment of the present disclosure, the computer implemented method when generating the recommendations, processes the device installation data using one or more data analysis models based on the flexibility determined or received as an input. The data analysis model refers to various methods, for example, finite element method (FEM), used for analysing parameters such as geographical boundary conditions, seismic and wind load boundary conditions, etc., in a static and/or dynamic method to generate recommendations on quantity and quality of the components required in the device assembly. For example, the computer implemented method may employ FEM analysis to formulate mechanical parameters including strength, stiffness, and/or mass based on a boundary condition posed by an operational kV rating and/or an overall size of the device thereby, arriving at recommended quantity of stiffeners, type of base frame channels, etc., required for device assembly.

According to yet another embodiment of the present disclosure, the recommendations that the computer implemented method generates, include a quantity of each of the component recommended, that is, a part list, a mounting position of each of the components, and an alignment of each of the components with respect to one another. The computer implemented method generates these recommendations based on dielectric clearances required to be maintained for a particular configuration and a substation in which the device is to be installed, for example, using layout details from the device installation data. For example, in a vertical break or a knee-type configuration of a disconnector, the dielectric clearances required are higher as compared with a center break configuration of a disconnector and therefore, more number of stiffeners with broader base frame channels may be recommended.

According to yet another embodiment of the present disclosure, the recommendations that the computer implemented method generates, include auxiliary components required for providing an enhanced adaptability of device installation, for example, an additional adapter plate apart from a base frame channel may be recommended to suit specific on-site requirements of the customers in case the base frame channel recommended lacks sufficient connection points/holes. Such adapter plates could be configured with generic patterns that can be punched out based on customer on-site requirements and avoid additional efforts required in re-ordering/replacing components.

According to yet another embodiment of the present disclosure, the computer implemented method stores the device installation data and the recommendations generated, in a device assembly database. Advantageously, the computer implemented method may access the device assembly database for retrieving the device installation data with minimal inputs from a user/customer. Moreover, the computer implemented method may retrieve the recommendations stored in the device assembly database for verification and validation of the recommendations being generated and tuning of the accuracy of the recommendations. Furthermore, the computer implemented method may access the device assembly database to generate reports for the user/customer on the assembly recommendations availed in the past.

According to yet another embodiment of the present disclosure, the computer implemented method seeks a confirmation and/or a feedback from the user/customer on the recommendations generated and stores the same in the device assembly database.

According to yet another embodiment of the present disclosure, the computer implemented method facilitates placement of orders for the components recommended, for example, by connecting the user/customer to vendor websites.

Also disclosed herein, is a device assembly system for assembling a modular switching device. The device assembly system comprises a non-transitory computer readable storage medium storing computer program instructions defined by modules of the device assembly system, and at least one processor communicatively coupled thereto, for executing the defined computer program instructions. The modules of the device assembly system comprise a data reception module and a recommendation generation module. The data reception module receives device installation data comprising at least geographical data and an operational rating of the switching device. The recommendation generation module generates, based on the device installation data, one or more recommendations. The device assembly system comprises a device assembly database for storing the device installation data and the recommendations. Each recommendation comprises at least one configuration of the switching device and multiple components required for assembly of the configuration(s) of the switching device from a component repository. According to one embodiment, the component repository is a part of the device assembly database. According to another embodiment, the component repository is maintained separately within the device assembly system or is accessible by the device assembly system over a wired/wireless communication network.

According to one embodiment, the recommendation generation module of the device assembly system comprises a flexibility determination module for determining a flexibility in mechanical parameter variations of the switching device based on the geographical data and the operational rating of the switching device. According to another embodiment, the recommendation generation module of the device assembly system comprises a data processing module for processing the device installation data using one or more data analysis models based on the flexibility.

Also disclosed herein, is a computer program product comprising a non-transitory computer readable storage medium storing computer program codes that comprise instructions executable by at least one processor. The computer program codes multiple computer program codes for executing steps carried out by the aforementioned computer implemented method disclosed herein.

The computer implemented method, device assembly system, and the computer program product disclosed herein achieve application of a specific range of components to different configurations of a device family thereby, reducing costs and increasing profits.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: is a perspective view of an active part of a switching device such as a horizontal center-break type disconnector according to state of the art.
- FIG 1B: is a perspective view of the base frame, according to state of the art, of the switching device shown in FIG 1A.
- FIG 1C: is a perspective view of a base frame according to state of the art for a double side break disconnector having a concave polygonal shaped rotary unit.
- FIG 2A: illustrates a process flowchart of an exemplary method for assembling a modular switching device.
- FIG 2B: illustrates a process flowchart of an exemplary method of generating recommendations for assembling the modular switching device.
- FIG 3: illustrates a switching device assembly system, for assembling a modular switching device.
- FIG 4: is a block diagram illustrating architecture of a computer system employed by the switching device assembly system illustrated in FIG 3, for assembling a modular switching device.
- FIG 5: illustrates an exemplary repository of components being used by the switching device assembly system illustrated in FIG 3 for assembling various configurations of a modular high voltage switching device.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

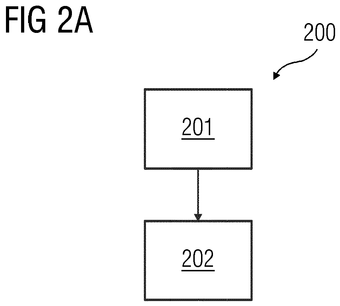

FIG 2A illustrates a process flowchart 200 of an exemplary method for assembling a modular switching device, for example, a high voltage disconnector 100 shown in FIG 1A and for example, having a base frame 106 shown in FIG 1C with a double break type configuration. The method at step 201, receives device installation data comprising at least geographical data and an operational rating of the switching device. The method at step 202, generates, based on the device installation data, one or more recommendations, each recommendation comprising at least one configuration of the switching device and multiple components 106A, 106B, 107, 108, 109, and/or 110 required for assembly of the at least one configuration of the switching device from a component repository.

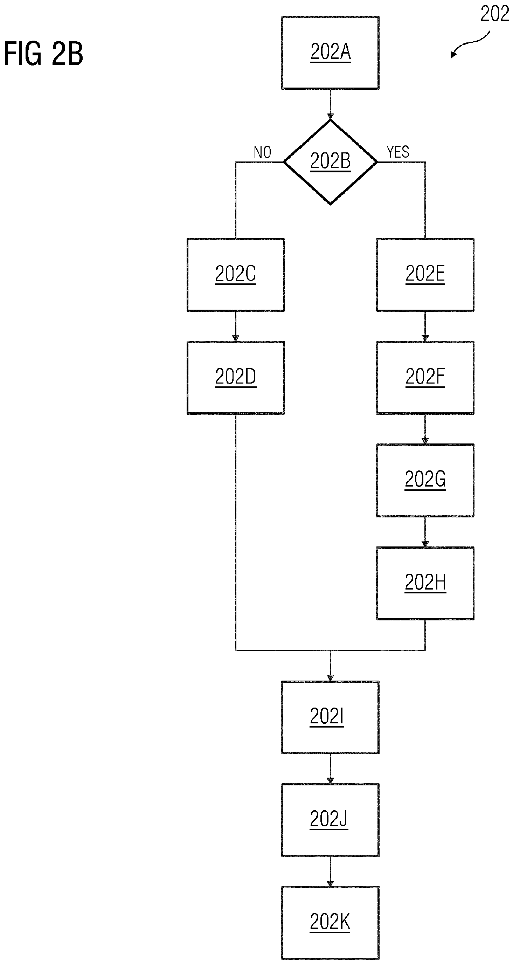

FIG 2B illustrates a process flowchart 202 of an exemplary method of generating recommendations. The method, at step 202A, determines a best suited configuration of the modular switching device based on the device installation data based on either historical data associated with the geography and the operational rating of the device or historical data associated with the user i.e. a customer who wishes to install the device. At step 202B, the method receives a confirmation from a user on the recommended configuration of the switching device. At step 202C, if the user is not in acceptance of the recommended configuration then, the method at step 202D receives user preference on the configuration and stores the same in the historical data associated with the user. At step 202E, if the user is in acceptance of the recommendation, the method determines a flexibility in mechanical parameter variations of the switching device based on the geographical data and the operational rating of the switching device. At step 202G, the method generates a recommendation on the components and a part list for each of the components based on the flexibility and the configuration accepted by the user. At step 202H, the method uses one or more data analysis models such as Finite Element Method (FEM) to generate component recommendations based on mechanical parameters such as stiffness, strength and/or mass, i.e., load to be borne. This data could be used as a validation method to validate the recommendations generated. The method stores any discrepancies encountered in the device assembly database for perusal during further iterations. The method at step 2021, renders these recommendations on a graphical user interface for the user to visualize. The method at step 202J, generates recommendations on mounting of the components for the user to refer during commissioning. The method at step 202K, provides options to the user to place an order for the recommended components.

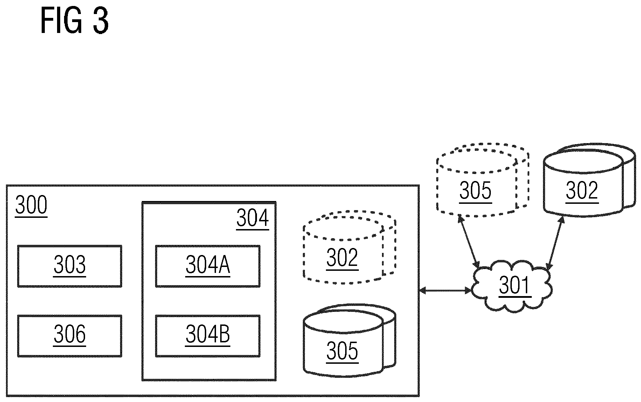

FIG 3 illustrates a switching device assembly system 300, for assembling a modular switching device. The switching device assembly system 300, is installable on and accessible by a user device, for example, a personal computing device, a workstation, a client device, a network enabled computing device, any other suitable computing equipment, and combinations of multiple pieces of computing equipment. The switching device assembly system 300 disclosed herein is in operable communication with a component repository 302 and a device assembly database 305, for example, over a communication network 301. The communication network 301 is, for example, a wired network, a wireless network, a communication network, or a network formed from any combination of these networks. The device assembly system 300 is downloadable and usable on the user device, or, is configured as a web-based platform, for example, a website hosted on a server or a network of servers, or, is implemented in the cloud computing environment as a cloud computing-based platform implemented as a service for analyzing data. The device assembly system 300 is developed, for example, using Google App engine cloud infrastructure of Google Inc., Amazon Web Services® of Amazon Technologies, Inc., the Amazon elastic compute cloud EC2® web service of Amazon Technologies, Inc., the Google® Cloud platform of Google Inc., the Microsoft® Cloud platform of Microsoft Corporation, etc.

The device assembly system 300 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 303, 304, etc., of the protection configuration system 300. The processor is configured to execute the defined computer program instructions. As illustrated in FIG 3, the device assembly system 300 comprises a graphical user interface (GUI) 306. A user using the user device can access the device assembly system 300 via the GUI 306. The GUI 306 is, for example, an online web interface, a web based downloadable application interface such as Microsoft® Windows® application, etc. The device assembly system 300 further comprises a data reception module 303 and a recommendation generation module 304. The data reception module 303 receives, for example, from a user using the user device to access the device assembly system 300, or from the device assembly database 305, device installation data comprising at least geographical data and an operational rating of the switching device.

The recommendation generation module 304 generates, based on the device installation data, one or more recommendations. Each recommendation comprises at least one configuration of the switching device and multiple components 106A, 106B, 107, 108, 109, and/or 110 required for assembly of the at least one configuration of the switching device from a component repository 302. The recommendation generation module 304 comprises a flexibility determination module 304A and a data processing module 304B. The flexibility determination module 304A determines a flexibility in mechanical parameter variations of the switching device based on the geographical data and the operational rating of the switching device. The data processing module 304B processes the device installation data using one or more data analysis models, for example, using finite element methods based on the flexibility. This analysis helps in generating optimal recommendations on component selection and component quantity as well as on component positioning for the switching device. The device assembly database 305 stores the device installation data and the one or more recommendations for future reference and perusal.

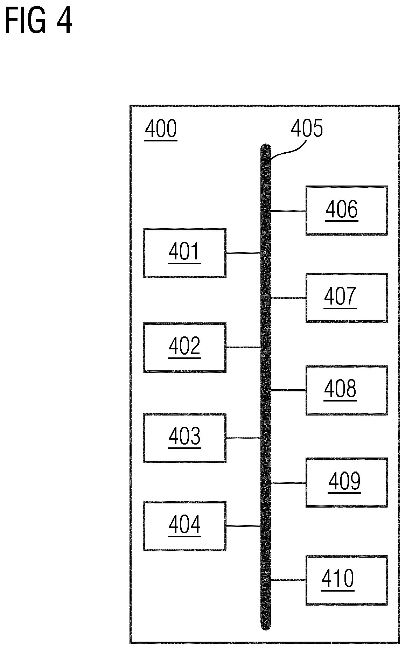

FIG 4 is a block diagram illustrating architecture of a computer system 400 employed by the switching device assembly system 300 illustrated in FIG 3, for assembling a modular switching device. The device assembly system 300 employs the architecture of the computer system 400 illustrated in FIG 3. The computer system 400 is programmable using a high-level computer programming language. The computer system 400 may be implemented using programmed and purposeful hardware. As illustrated in FIG 4, the computer system 400 comprises a processor 401, a non-transitory computer readable storage medium such as a memory unit 402 for storing programs and data, an input/output (I/O) controller 403, a network interface 404, a data bus 405, a display unit 406, input devices 407, a fixed media drive 408 such as a hard drive, a removable media drive 409 for receiving removable media, output devices 410, etc. The processor 401 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 401 may also be implemented as a processor set comprising, for example, a general-purpose microprocessor and a math or graphics co-processor. The processor 401 is selected, for example, from the Intel® processors, Advanced Micro Devices (AMD®) processors, International Business Machines (IBM®) processors, etc. The device assembly system 300 disclosed herein is not limited to a computer system 400 employing a processor 401. The computer system 400 may also employ a controller or a microcontroller. The processor 401 executes the modules, for example, 303, 304, etc., of the device assembly system 300.

The memory unit 402 is used for storing programs, applications, and data. For example, the modules 303, 304, etc., of the device assembly system 300 are stored in the memory unit 402 of the computer system 400. The memory unit 402 is, for example, a random-access memory (RAM) or another type of dynamic storage device that stores information and instructions for execution by the processor 401. The memory unit 402 also stores temporary variables and other intermediate information used during execution of the instructions by the processor 401. The computer system 400 further comprises a read only memory (ROM) or another type of static storage device that stores static information and instructions for the processor 401. The I/O controller 403 controls input actions and output actions performed by the device assembly system 300.

The network interface 404 enables connection of the computer system 400 to the communication network 301. For example, the device assembly system 300 connects to the communication network 301 via the network interface 404. In an embodiment, the network interface 404 is provided as an interface card also referred to as a line card. The network interface 404 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 405 permits communications between the modules, for example, 302, 303, 304, 305, 306, etc., of device assembly system 300.

The display unit 406, via the graphical user interface (GUI) 306, displays information such as recommendations generated, user interface elements such as text fields, buttons, windows, etc., for allowing a user to provide his/her inputs such as device installation data. The display unit 406 comprises, for example, a liquid crystal display, a plasma display, an organic light emitting diode (OLED) based display, etc. The input devices 407 are used for inputting data into the computer system 400. The input devices 407 are, for example, a keyboard such as an alphanumeric keyboard, a touch sensitive display device, and/or any device capable of sensing a tactile input.

Computer applications and programs are used for operating the computer system 400. The programs are loaded onto the fixed media drive 408 and into the memory unit 402 of the computer system 400 via the removable media drive 409. In an embodiment, the computer applications and programs may be loaded directly via the communication network 301. Computer applications and programs are executed by double clicking a related icon displayed on the display unit 406 using one of the input devices 407. The output devices 410 output the results of operations performed by the device assembly system 300. For example, the device assembly system 300 provides graphical representation of the recommendations including a device configuration proposed and a list of components required for the same, using the output devices 410.

The processor 401 executes an operating system, for example, the Linux® operating system, the Unix® operating system, any version of the Microsoft® Windows® operating system, the Mac OS of Apple Inc., the IBM® OS/2, etc. The computer system 400 employs the operating system for performing multiple tasks. The operating system is responsible for management and coordination of activities and sharing of resources of the computer system 400. The operating system further manages security of the computer system 400, peripheral devices connected to the computer system 400, and network connections. The operating system employed on the computer system 400 recognizes, for example, inputs provided by the users using one of the input devices 407, the output display, files, and directories stored locally on the fixed media drive 408. The operating system on the computer system 400 executes different programs using the processor 401. The processor 401 and the operating system together define a computer platform for which application programs in high level programming languages are written.

The processor 401 of the computer system 400 employed by the device assembly system 300 retrieves instructions defined by the modules 303, 304, etc., of the device assembly system 300 for performing respective functions disclosed in the detailed description of FIG 3. The processor 401 retrieves instructions for executing the modules, for example, 303, 304, etc., of the device assembly system 300 from the memory unit 402. A program counter determines the location of the instructions in the memory unit 402. The program counter stores a number that identifies the current position in the program of each of the modules, for example, 303, 304, etc., of the device assembly system 300. The instructions fetched by the processor 401 from the memory unit 402 after being processed are decoded. The instructions are stored in an instruction register in the processor 401. After processing and decoding, the processor 401 executes the instructions, thereby performing one or more processes defined by those instructions.

At the time of execution, the instructions stored in the instruction register are examined to determine the operations to be performed. The processor 401 then performs the specified operations. The operations comprise arithmetic operations and logic operations. The operating system performs multiple routines for performing several tasks required to assign the input devices 407, the output devices 410, and memory for execution of the modules, for example, 303, 304, etc., of the device assembly system 300. The tasks performed by the operating system comprise, for example, assigning memory to the modules, for example, 303, 304, etc., of the device assembly system 300, and to data used by the device assembly system 300, moving data between the memory unit 402 and disk units, and handling input/output operations. The operating system performs the tasks on request by the operations and after performing the tasks, the operating system transfers the execution control back to the processor 401. The processor 401 continues the execution to obtain one or more outputs. The outputs of the execution of the modules, for example, 303, 304, etc., of the device assembly system 300 are displayed to the user on the GUI 306.

For purposes of illustration, the detailed description refers to the device assembly system 300 being run locally on the computer system 400, however the scope of the present invention is not limited to the device assembly system 300 being run locally on the computer system 400 via the operating system and the processor 401, but may be extended to run remotely over the communication network 301 by employing a web browser and a remote server, a mobile phone, or other electronic devices. One or more portions of the computer system 400 may be distributed across one or more computer systems (not shown) coupled to the communication network 301.

Disclosed herein is also a computer program product comprising a non-transitory computer readable storage medium that stores computer program codes comprising instructions executable by at least one processor 401 for assembling a modular switching device, as disclosed in the present invention. The computer program product comprises a first computer program code for receiving device installation data comprising at least geographical data and an operational rating of the switching device; and a second computer program code for generating, based on the device installation data, one or more recommendations. The second computer program code comprises a third computer program code for determining a flexibility in mechanical parameter variations of the switching device based on the geographical data and the operational rating of the switching device. The second computer program code comprises a fourth computer program code for processing the device installation data using one or more data analysis models based on the flexibility.

In an embodiment, a single piece of computer program code comprising computer executable instructions performs one or more steps of the method according to the present invention, for configuring a protection system of a power network. The computer program codes comprising computer executable instructions are embodied on the non-transitory computer readable storage medium. The processor 401 of the computer system 400 retrieves these computer executable instructions and executes them. When the computer executable instructions are executed by the processor 401, the computer executable instructions cause the processor 401 to perform the steps of the method for configuring a protection unit in a power network.

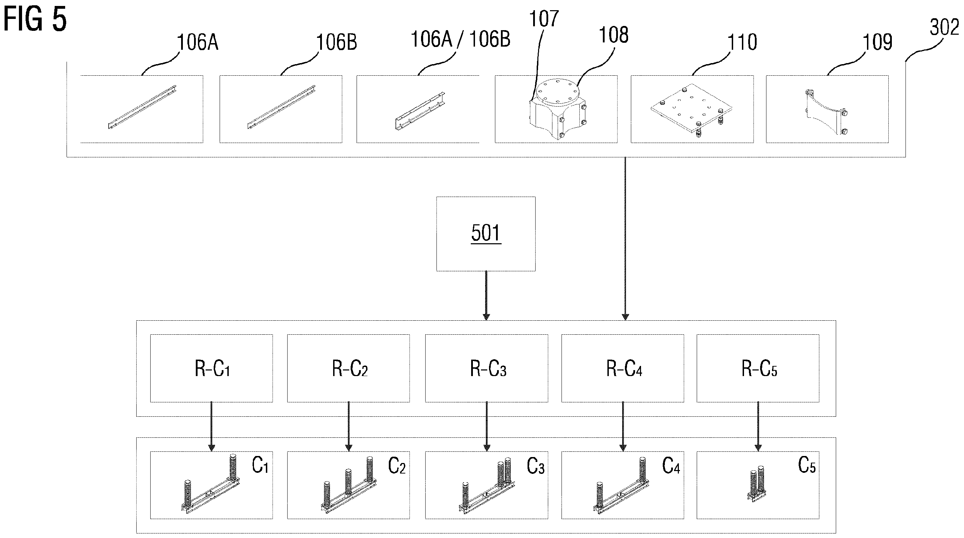

FIG 5 illustrates an exemplary repository 302 of components being used by the switching device assembly system 300 illustrated in FIG 3 for assembling various configurations C1-C5 of a modular high voltage switching device, that is, a high voltage disconnector. Configuration C1 is a center break disconnector, configuration C2 is a double break disconnector, configuration C3 is a knee type or a vertical break disconnector, configuration C4 is a side break disconnector, and configuration C5 is a vertical reach or a semi-pantograph, or a pantograph disconnector. The components include base frame channels 106A and 106B having C-type channels and U-type channels, rotary units 107 of a generally concave polygonal shape, turn tables 108, stiffeners 109, and elevator plates 110. The switching device assembly system 300 receives user preferences 501 such as one or more parameters about geography of installation of the switching device, desired kV rating, etc. The switching device assembly system 300 generates one or more recommendations R_C1, R_C2, R_C3, R_C4, and/or R_C5 for the disconnector configuration that would be best suited given available clearances and substation layout where the disconnector is to be installed based on user inputs 501. Further to which, based on user input 501 as to whether he/she would want to opt for flexibility in mechanical stiffness of the device, the switching device assembly system 300 generates recommendations R_C1, R_C2, R_C3, R_C4, and/or R_C5 on the components to be used and a quantity of each of the component recommended. The Table 1 provided below includes a list of components generated as a recommendation for a user preference of flexibility w.r.t mechanical stiffness. Whereas, the Table 2 provided below includes a list of components generated as a recommendation for a user preference of non-flexibility w.r.t mechanical stiffness. A quantity of components from the ranges provided in below tables are selected based on kV rating. For example, for a 72.5kV up to 145 kV center break application, one unit of a stiffener may be sufficient, but 170kV and 245kV at least two units of stiffeners are recommended. Similarly, when the recommendations are being given without flexibility preference, for ratings of 145kV two stiffeners may be recommended for ensuring safer operation w.r.t the mechanical parameters.

**Table 1**

| Device/Disconnector Type | Substructure Item/Component/Part | | | | | | | |
|---|---|---|---|---|---|---|---|---|
| | 2x C-Type Channel | Only as per IEC | Extended (seism ic, wind and/or terminal loads beyond IEC) | Only as per IEC | Extended (seis mic, and/or terminal loads beyond IEC) | Only as per IEC | Extended (seis mic, wind and/or terminal loads beyond IEC, but limited) | Extended (maximum with same parts ) |
| | | Rotary Unit** (integrated) | Rotary Unit Enforced** (integrated) | Elevator Plate (post insulator) | Elevator Plate Enforced (post insulator) | Horizontal Diagonal Stiffener* | Horizontal Diagonal Stiffener* | Horizontal Diagonal Stiffener (pair - top and bottom)* |
| Center Break | 2 | 2 | 2 | 0 | 0 | 1..2 | 2..4 | 4..8 |
| Double Side Break | 2 | 1 | 1 | 2 | 2 | 0..2 | 2..4 | 4..8 |
| Side Break | 2 | 1 | 1 | 1 | 1 | 2..3 | 3..5 | 5..9 |
| Knee-Type | 2 | 1 | 1 | 2 | 2 | 2..3 | 3..5 | 5..9 |
| Vertical Break | 2 | 1 | 1 | 2 | 2 | 2..3 | 3..5 | 5..9 |
| Semi-Pantograph | 2 | 1 | 1 | 1 | 1 | 0..1 | 1..2 | 2..4 |
| Pantograph | 2 | 1 | 1 | 1 | 1 | 0..1 | 1..2 | 2..4 |

| | | | | | | | | |
|---|---|---|---|---|---|---|---|---|
| *: screwed or welded depends on the sourcing market/supplier basis and accordingly cost effectiveness. **: extruded or casted depends on the sourcing market/supplier basis and accordingly cost effectiveness and/or capabilities where casting usually demands higher variation management efforts (length) and is from engineering point of view not preferred. | | | | | | | | |

**Table 2**

| Device/Disconnector Type | Substructure Item/Component/Part | | | |
|---|---|---|---|---|
| | 2x U-Type Channel | Only as per IEC | Elevator Plate (post insulator) | Only as per IEC |
| | | Rotary Unit** (integrated) | | Vertical Straight Stiffener* |
| Center Break | 2 | 2 | 0 | 1..2 |
| Double Side Break | 2 | 1 | 2 | 0..2 |
| Side Break | 2 | 1 | 1 | 2..3 |
| Knee-Type | 2 | 1 | 2 | 2..3 |
| Vertical Break | 2 | 1 | 2 | 2..3 |
| Semi-Pantograph | 2 | 1 | 1 | 0..1 |
| Pantograph | 2 | 1 | 1 | 0..1 |

| | | | | |
|---|---|---|---|---|
| *: screwed or welded depends on the sourcing market/supplier basis and accordingly cost effectiveness. **: extruded or casted depends on the sourcing market/supplier basis and accordingly cost effectiveness and/or capabilities where casting usually demands higher variation management efforts (length) and is from engineering point of view not preferred. | | | | |

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of Reference Numerals

### State of the art

100 switching device/disconnector
101A, 101B movable current path arms
102A, 102B terminal stems
103 contact system
104A, 104B insulators
105A, 105B rotary units/rotary bases/rotary stool bases/rotary pedestals
106 base frame
106A, 106B channels of the base frame
107 generally concave polygon shaped rotary unit for modularity of assembly
108 turn table
109 stiffener
110 elevator plate

### Present Disclosure

- 300: device assembly system
- 301: communication network
- 302: component repository
- 303: data reception module
- 304: recommendation generation module
- 304A: flexibility determination module
- 304B: data processing module
- 305: device assembly database
- 306: Graphical user interface (GUI)
- 401: processor
- 402: memory unit
- 403: input/output (I/O) controller
- 404: network interface
- 405: data bus
- 406: display unit
- 407: input devices
- 408: fixed media drive
- 409: removable media drive
- 410: output devices
- 501: device installation data
- R-C1-R-C5: recommendations for device configurations C1-C5

## Claims

1. A computer implemented method (200) for assembling a modular switching device, comprising:
- receiving (201) device installation data (501) comprising at least geographical data and an operational rating of the switching device;
- generating (202), based on the device installation data (501), one or more recommendations (R_C1 - R_C5), wherein each recommendation (R_C1 - R_C5) comprises:
o at least one configuration (C1-C5) of the switching device; and
o a plurality of components (106A, 106B, 107, 108, 109, 110) required for assembly of the at least one configuration (C1-C5) of the switching device from a component repository (302).

2. The computer implemented method (200) according to claim 1, wherein the geographical data comprises one or more of a geographical region of device installation, a seismic zone of the geographical region, a wind zone of the geographical region, a substation of device installation, and a layout of the substation of device installation.

3. The computer implemented method (200) according to claim 1, wherein the operational rating of the switching device comprises one or more of an operational voltage rating, an operational power rating, an operational current rating, and an estimate terminal load.

4. The computer implemented method (200) according to claim 1, wherein generating the one or more recommendations (R_C1 - R_C5) comprises determining a flexibility in mechanical parameter variations of the switching device based on the geographical data and the operational rating of the switching device.

5. The computer implemented method (200) according to claim 4, wherein generating the one or more recommendations (R_C1 - R_C5) comprises processing the device installation data using one or more data analysis models based on the flexibility.

6. The computer implemented method (200) according to claim 1, wherein the switching device is a modular high voltage switching device comprising one of a disconnector, an earthing switch, and a circuit breaker.

7. The computer implemented method (200) according to claim 1, wherein the one or more recommendations (R_C1 - R_C5) comprise one or more of a quantity of each of the components (106A, 106B, 107, 108, 109, 110), a mounting position of each of the components (106A, 106B, 107, 108, 109, 110), and an alignment of each of the components (106A, 106B, 107, 108, 109, 110) with respect to one another.

8. The computer implemented method (200) according to claim 1, further comprising storing device installation data (501) and the one or more recommendations (R_C1 - R_C5) in a device assembly database (305).

9. A device assembly system (300) for assembling a modular switching device, said device assembly system (300) comprising:
- a non-transitory computer readable storage medium storing computer program instructions defined by modules of said device assembly system (300);
- at least one processor (401) communicatively coupled to said non-transitory computer readable storage medium, said at least one processor (401) executing said defined computer program instructions; and
- said modules of said device assembly system (300) comprising:
o a data reception module (303) configured to receive device installation data (501) comprising at least geographical data and an operational rating of the switching device;
o a recommendation generation module (304) configured to generate, based on the device installation data (501), one or more recommendations (R_C1 - R_C5), wherein each recommendation (R_C1 - R_C5) comprises:
▪ at least one configuration (C1-C5) of the switching device; and
▪ a plurality of components (106A, 106B, 107, 108, 109, 110) required for assembly of the at least one configuration (C1-C5) of the switching device from a component repository (302) .

10. The device assembly system (300) according to claim 9, wherein the recommendation generation module (304) comprises a flexibility determination module (304A) configured to determine a flexibility in mechanical parameter variations of the switching device based on the geographical data and the operational rating of the switching device.

11. The device assembly system (300) according to claim 10, wherein the recommendation generation module (304) comprises a data processing module (304B) configured to process the device installation data using one or more data analysis models based on the flexibility.

12. The device assembly system (300) according to claim 9, further comprising a device assembly database (305) configured to store device installation data (501) and the one or more recommendations (R_C1 - R_C5).

13. A computer program product comprising a non-transitory computer readable storage medium, said non-transitory computer readable storage medium storing computer program codes that comprise instructions executable by at least one processor (401), said computer program codes comprising:
- a first computer program code for receiving (201) device installation data (501) comprising at least geographical data and an operational rating of the switching device;
- a second computer program code for generating (202), based on the device installation data (501), one or more recommendations (R_C1 - R_C5), wherein each recommendation (R_C1 - R_C5) comprises:
o at least one configuration (C1-C5) of the switching device; and
o a plurality of components (106A, 106B, 107, 108, 109, 110) required for assembly of the at least one configuration (C1-C5) of the switching device from a component repository (302).

14. The computer program product according to claim 13, wherein the second computer program code comprises a third computer program code for determining a flexibility in mechanical parameter variations of the switching device based on the geographical data and the operational rating of the switching device.

15. The computer program product according to claim 13, wherein the second computer program code comprises a fourth computer program code for processing the device installation data using one or more data analysis models based on the flexibility.
